# EUROPÄISCHE PATENTSCHRIFT

(11) **EP 0 753 111 B1**
(45) Veröffentlichungstag und Bekanntmachung des Hinweises auf die Patenterteilung: **29.07.1998**
(21) Anmeldenummer: 95908909.5
(22) Anmeldetag: 07.02.1995
(51) Int. Cl.: F16F 15/26, F16F 7/10

(54) **KOLBENMASCHINE MIT AUSGLEICH FREIER MASSENKRÄFTE**
FREE INERTIA FORCES BALANCING PISTON ENGINE
MOTEUR A PISTONS A EQUILIBRAGE DES FORCES LIBRES PROPORTIONNELLES A LA MASSE

(30) Priorität: 27.03.1994 DE 4410495
(43) Veröffentlichungstag der Anmeldung: 15.01.1997
(73) Patentinhaber: DR. SCHRICK GMBH, 42899 Remscheid (DE)
(72) Erfinder: SCHRICK, Peter, D-42899 Remscheid (DE); HANULA, Barna, D-42897 Remscheid (DE)
(74) Vertreter: Kosel, Peter, Dipl.-Ing.
(86) Internationale Anmeldenummer: EP9500423
(87) Internationale Veröffentlichungsnummer: WO9526474

(56) Entgegenhaltungen:
- DE-C- 4 121 647
- FR-A- 888 738
- FR-A- 2 129 524
- US-A- 1 640 634
- US-A- 1 738 876
- US-A- 3 172 630
- PATENT ABSTRACTS OF JAPAN vol. 006 no. 101 (M-135) ,10.Juni 1982 & JP,A,57 033247 (MATSUSHITA ELECTRIC IND CO LTD) 23.Februar 1982,

## Beschreibung

Die Erfindung betrifft eine Kolbenmaschine nach dem Oberbegriff des Anspruchs 1.

Einige Bauarten von Kolbenmaschinen, insbesondere solche mit nur einer Kolben/Zylinder-Einheit und solche mit mehreren in einer Reihe angeordneten Kolben/Zylinder-Einheiten, erzeugen freie Massenkräfte. Diese freien Massenkräfte führen u.a. zu nicht unerheblichen Schwingungsbelastungen der Anbauteile und zu Komfortschmälerungen, z.B. in Personenkraftwagen.

Bei einer bekannten 4 Zylinder-Kolbenmaschine der eingangs genannten Art (US 1 640 634 A) ist in einer Querebene ein Schlepphebel heb- und senkbar am Kurbelgehäuse gelagert. Ein mittlerer Bereich des Schlepphebels liegt an einem zu der Kurbelwelle konzentrischen Nockenkörper mit zwei diametral angeordneten, gleich hohen Nocken an. Das freie Ende des Schlepphebels ist als Blattfeder ausgebildet. Das freie Ende der Blattfeder greift in eine Umfangsnut einer kolbenartigen Ausgleichsmasse ein, die in einem seitlich neben der Kurbelwelle im Kurbelgehäuse befestigten Zylinder parallel zu den Längsachsen der Maschinenzylinder verschiebbar geführt ist. Jede Stirnseite der Ausgleichsmasse liegt an einer Schraubenfeder an, die an einem Schraubstopfen abgestützt ist. Jeder Schraubstopfen ist einerseits zur Bestimmung der axialen Ruhelage der Ausgleichsmasse und andererseits zur Einstellung der auf die Ausgleichsmasse durch die Schraubenfedern ausgeübten Druckvorspannkraft in einer Gewindebohrung des Zylinders axial einstellbar. Kalibrierte Druchgangsbohrungen in den beiden Schraubstopfen und in der Ausgleichsmasse bewirken im Betrieb eine Dämpfung der auf und ab schwingenden Bewegung der Ausgleichsmasse. Dieses Ausgleichssystem ist so bemessen und eingestellt, daß das Schwingfeder/Ausgleichsmasse-System eine Eigenschwingzahl aufweist, die annähernd gleich der Eigenschwingzahl der Tragkonstruktion für die Kolbenmaschine ist. So soll die Ausgleichsmasse im Resonanzfall die freien Massenkräfte 2. Ordnung der Kolbenmaschine ausgleichen. Das gesamte Ausgleichssystem umfaßt die Ausgleichsmasse und zusätzlich Massenanteile der beiden Schraubenfedern und des Schlepphebels. Die Resultierende des Ausgleichssystems wirkt in seitlichem Abstand von der Längsachse der Kurbelwelle und erzeugt daher unerwünschte Drehmomente wechselnder Richtung.

Bei einer an sich bekannten Kolbenmaschine (DE 23 33 038 A1) ist die Ausgleichsmasse in allen Ausführungsbeispielen bogenförmig geführt und wird in Berührung mit Nocken eines Nockenkörpers gehalten. Nach einer Ausführungsform sind bei einem 4 Zylinder-Reihenmotor die beiden, dem mittleren Kurbelwellenhauptlager benachbarten Kurbelwangen als auch in Umfangsrichtung gegeneinander versetzte Nockenscheiben ausgebildet, während die Ausgleichsmasse aus einer um eine parallel zur Kurbelwellenachse angeordnete Achse heb- und senkbaren, in der Draufsicht im wesentlichen H-förmigen Ausgleichsschwinge besteht. Diese Ausbildung ist aufwendig und beansprucht erheblichen seitlichen Raum in der Kolbenmaschine.

Aus der DE 31 37 933 A 1 ist es an sich bekannt, wenigstens eine Ausgleichsmasse von einem gesonderten Hubzapfen der Kurbelwelle über ein Ausgleichspleuel in Gegenphase zu den Arbeitskolben anzutreiben. Die Ausgleichsmasse ist mittels einer am Maschinengehäuse gelenkig gehaltenen Schwinge zur oszillierenden Bewegung auf einer kreisbogenförmigen Bahn geführt. Die Schwinge ist im wesentlichen parallel zur Kurbelwellenachse angeordnet. Auch dies ist eine aufwendige und erheblichen Raum unterhalb der Kurbelwelle beanspruchende Bauweise.

Aus der US 4 724 923 A ist ein Schwingungsdämpfer an sich bekannt, bei dem eine Dämpfungsmasse mit beidseitigem Luftspalt über Federn an U-förmigen Jochen von Elektromagneten aufgehängt ist. Auf jedem Schenkel jedes Jochs befindet sich eine Spule. Der Stromfluß durch die Spulen ist steuerbar zur Änderung der Eigenfrequenz des Schwingungsdämpfers. Die Joche sind an demjenigen Bauteil befestigt, dessen Schwingungen gedämpft werden sollen, also am angeregten Bauteil. Der Schwingungsdämpfer reduziert eine vorhandene Schwingungsamplitude, verhindert aber nicht die Entstehung der Schwingungen. Die passiven Bewegungen der Dämpfungsmasse werden durch die zu dämpfenden Schwingungen des Bauteils erzeugt und nicht durch den Schwingungsdämpfer. Im Gegensatz dazu wird beim Anmeldungsgegenstand die Ausgleichsmasse gesteuert aktiv bewegt und dadurch eine Anregung durch die Kolbenmaschine zumindest annähernd verhindert, also ein Ausgleich freier Massenkräfte an der Quelle vorgenommen.

Aus dem gleichen Prinzip wie die US 4 724 923 A beruht die JP 57-33 247 A. Dort ist ein solcher Schwingungsdämpfer entweder am Umfang (Fig. 1 oder 2) oder koaxial an einer Stirnseite (Fig. 3 bis 5) des Gehäuses eines Rotationskompressors angebracht. Der Rotationskompressor wird durch einen Elektromotor angetrieben. Die Drehzahl des Elektromotors kann in Abhängigkeit von der Belastung des Kompressors oder von Schwankungen der Spannung der Stromquelle in verhältnismäßig geringen Grenzen schwanken. Entsprechend gering ändert sich die Schwingungszahl und wird die Schwingungszahl des Schwingungsdämpfers durch Steuerung von Elektromagneten angepaßt.

Der Erfindung liegt die Aufgabe zugrunde, den baulichen und betrieblichen Aufwand für den Ausgleich der freien Massenkräfte herabzusetzen.

Diese Aufgabe ist durch die Merkmale des Anspruchs 1 gelöst. Zu den Kolbenmaschinen zählen insbesondere Verbrennungsmotoren.

Durch die Merkmale des Anspruchs 1 läßt sich auf einfache Weise der gewünschte Ausgleich der freien Massenkräfte bei allen Drehzahlen erzielen. Freie Massenkräfte 1.Ordnung lassen sich mit der Kurbelwellenfrequenz und freie Massenkräfte der 2.Ordnung mit der doppelten Kurbelwellenfrequenz ausgleichen. Es können z.B. gemäß Anspruch 3 progressiv wirkende Schwingfedern eingesetzt werden.

Durch die Merkmale des Anspruchs 2 ist ein sehr leistungsfähiger, gut fernsteuerbarer Schwingungsantrieb geschaffen.

Gemäß Anspruch 4 kann der Antriebsmotor elektrisch oder hydraulisch oder pneumatisch sein. Anstelle der Kurbel kann ein Exzenter Verwendung finden. Läuft die Kurbel oder der Exzenter mit der Kurbelwellendrehzahl der Kolbenmaschine um, werden freie Massenkräfte 1.Ordnung ausgeglichen. Bei doppelter Kurbelwellendrehzahl findet ein Ausgleich der freien Massenkräfte 2.Ordnung statt.

Gemäß Anspruch 5 ist auf einfache Weise eine Hubbeeinflussung der Ausgleichsmasse ermöglicht.

Mit den Merkmalen des Anspruchs 6 lassen sich wiederum auf einfache Weise freie Massenkräfte 1.Ordnung ausgleichen, wenn die Welle entweder die Kurbelwelle der Kolbenmaschine ist oder mit gleicher Drehzahl wie diese umläuft. Entsprechend sind freie Massenkräfte 2.Ordnung auszugleichen, wenn die Welle zwei gleiche, diametral gegenüberligende Nocken aufweist. Das Folgeelement kann z.B. als Schlepphebel mit einer Nockenrolle ausgebildet und durch eine Feder stets in Anlage an dem Nockenkörper gehalten sein.

Gemäß Anspruch 7 oder 8 läßt sich dem Schwingfeder/Ausgleichsmasse-System nach Belieben Energie zuführen oder entnehmen.

Gemäß Anspruch 9 läßt sich mit Vorteil als Schwingfeder eine progressiv wirkende Schraubenfeder einsetzen.

Auch die Gasfederbälge gemäß Anspruch 10 stellen eine zuverlässige progressiv wirkende Schwingfeder dar.

Gemäß Anspruch 11 erübrigt sich eine gesonderte Führung der Ausgleichsmasse.

Anspruch 12 bietet konstruktive und betriebliche Vorteile.

Die Merkmale des Anspruchs 13 führen zu einer kostengünstigen und dennoch funktionssicheren Anordnung.

Gemäß Anspruch 14 ergeben sich günstige Betriebsverhältnisse.

Vorzugsweise ist die Ausgleichsmasse gemäß Anspruch 15 gegenüber dem Zylinder abgedichtet. Hier reicht in der Regel schon eine Labyrinthdichtung.

Die Merkmale des Anspruchs 16 führen zu einer betriebs- und kostengünstigen Lösung.

Gemäß Anspruch 17 kann die Anordnung reibungsarm oder reibungsfrei ausgebildet sein.

Gemäß Anspruch 18 oder 19 ist eine funktionssichere mechanische Anordnung geschaffen.

Gemäß Anspruch 20 ist wiederum die kreisbogenförmige Bahn des Massenschwerpunkts möglichst gut einer Parallelen zu der Längsachse der Zylinder angenähert.

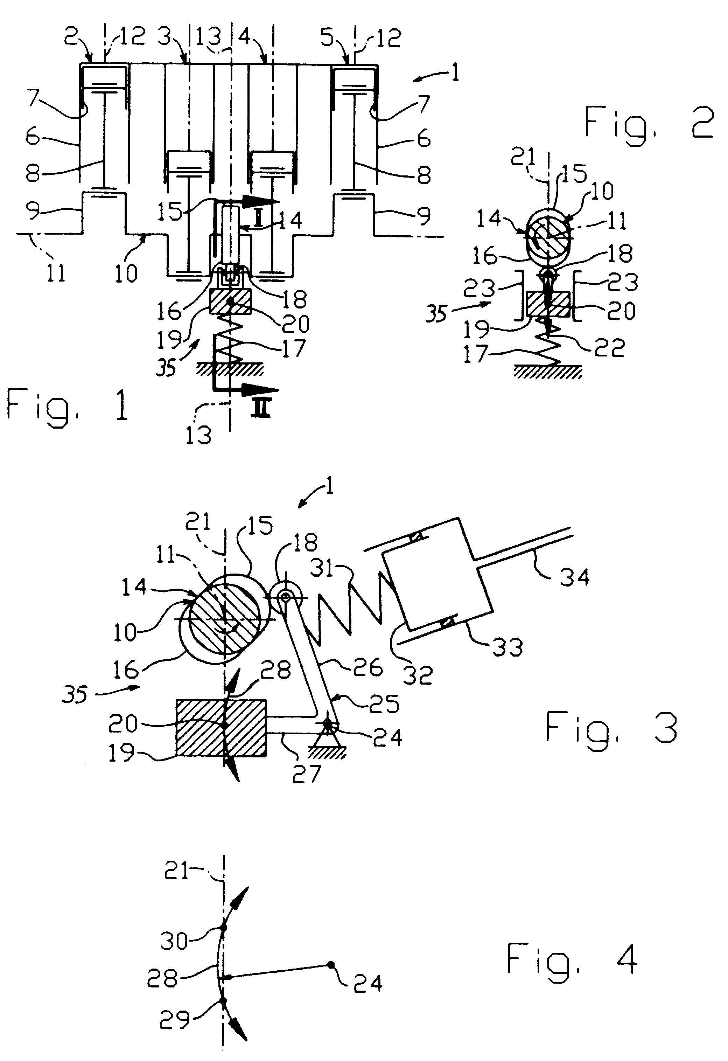

Diese und weitere Merkmale und Vorteile der Erfindung werden nachfolgend anhand der in den Zeichnungen dargestellten Ausführungsbeispiele näher erläutert, wobei die Figuren 1 bis 3 und 5 bis 12 als nicht von der Erfindung erfaßt zu betrachten sind. Es zeigt
Fig. 1 einen schematischen Längsschnitt durch eine 4 Zylinder-Kolbenmaschine, z.B. einen Verbrennungsmotor,
Fig. 2 die Schnittansicht nach Linie II-II in Fig. 1,
Fig. 3 eine teilweise geschnittene, schematische Ansicht einer anderen Ausgleichsvorrichtung,
Fig. 4 ein abgewandeltes Detail aus Fig. 3 in schematischer Darstellung, das gemäß Anspruch 20 auch als Ausgestaltung der Erfindung vorgesehen ist.

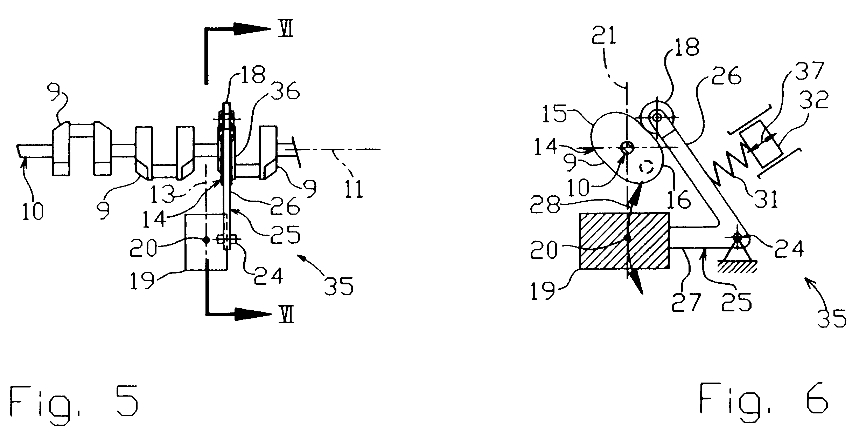

Fig. 5 eine Seitenansicht einer weiteren Ausgleichsvorrichtung,
Fig. 6 die Schnittansicht nach Linie VI-VI in Fig. 5,

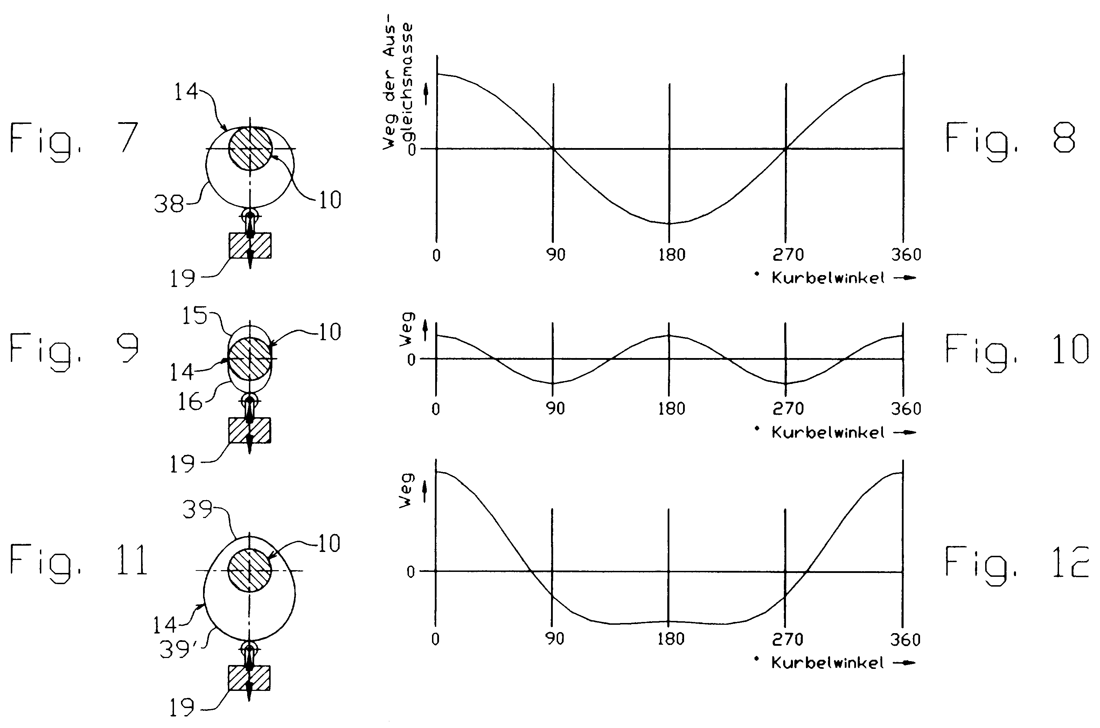

Fig. 7 eine Ausgleichsvorrichtung mit einer Nockenform für den Ausgleich freier Massenkräfte 1.Ordnung,
Fig. 8 das zu Fig. 7 gehörende Weg/Kurbelwinkel-Diagramm,
Fig. 9 eine andere Ausgleichsvorrichtung mit einer Nockenform zum Ausgleich freier Massenkräfte 2.Ordnung,
Fig. 10 das zu Fig. 9 gehörende Weg/Kurbelwinkel-Diagramm,

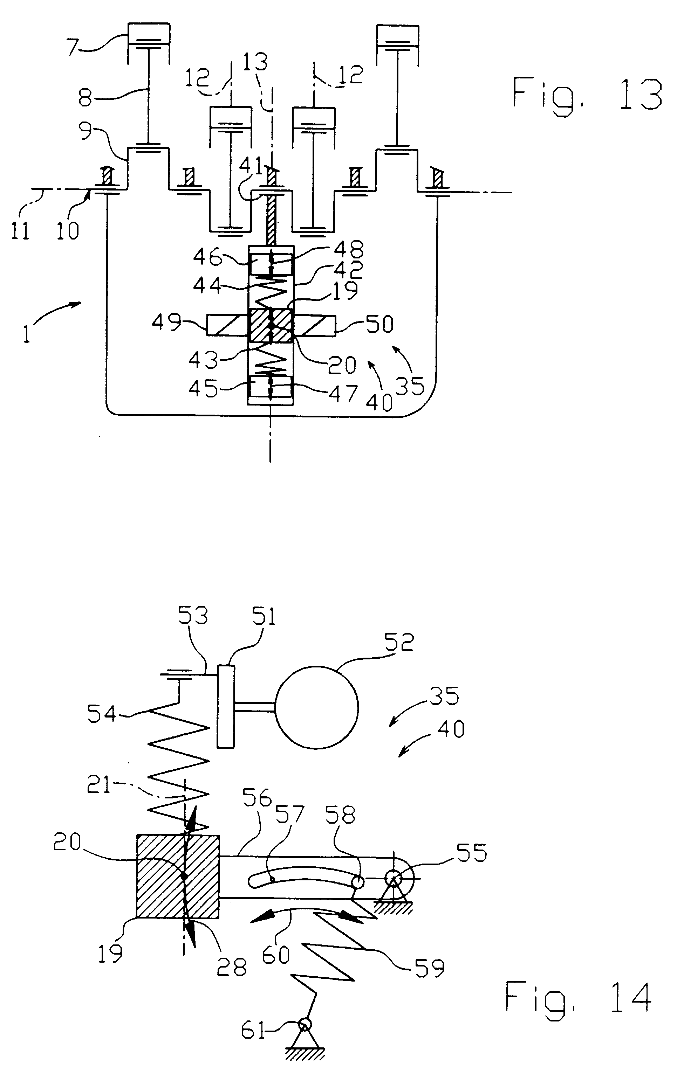

Fig. 11 eine Ausgleichsvorrichtung mit einer Nockenform für den Ausgleich freier Massenkräfte 1. und 2. Ordnung,
Fig. 12 das zu Fig. 11 gehörende Weg/Kurbelwinkel-Diagramm,
Fig. 13 einen schematischen Längsschnitt durch eine Kolbenmaschine mit wiederum anderer Ausgleichsvorrichtung und
Fig. 14 bis 21 jeweils unterschiedliche Ausgleichsvorrichtungen in schematischer Darstellung.

In Fig. 1 weist eine 4 Zylinder-Kolbenmaschine 1 vier in Reihe angeordnete Kolben/Zylinder-Einheiten 2 bis 5 auf. Jede der Einheiten 2 bis 5 besitzt einen in einem Zylinder 6 oszillierenden Kolben 7, der über eine Pleuelstange 8 an einer Kurbel 9 einer Kurbelwelle 10 angelenkt ist. Eine Längsachse der Kurbelwelle 10 ist mit 11 bezeichnet und Längsachsen der Zylinder 6 mit 12.

Wegen der symmetrischen Bauweise der Kolbenmaschine 1 ist eine Ausgleichsvorrichtung 35 in einer mittigen Querebene 13 der Kolbenmaschine 1 vorgesehen. An der Kurbelwelle 10 ist ein Nockenkörper 14 befestigt, der diametral gegenüberliegende Nocken 15 und 16 aufweist. Vorzugsweise ist der Nockenkörper 14 einstückig mit der Kurbelwelle 10 ausgebildet und sind die Nocken 15, 16 an die Kurbelwelle 10 angeschliffen.

Durch eine maschinenfest abgestützte Druckfeder 17 wird eine Nockenrolle 18 einer Ausgleichsmasse 19 in ständiger Anlage an dem Nockenkörper 14 gehalten. Ein Massenschwerpunkt 20 der Ausgleichsmasse 19 liegt einerseits in der mittigen Querebene 13 und andererseits in einer zumindest annähernd durch den gemeinsamen Massenschwerpunkt der Kolben 7 und der oszillierenden Anteile der Pleuelstangen 8 verlaufenden Längsebene 21 (Fig. 2) der Kolbenmaschine 1.

Normalerweise sind bei derartigen Reihenkolbenmaschinen die freien Massenkräfte 1.Ordnung ohnehin ausgeglichen. Hier geht es im wesentlichen um den Ausgleich der freien Massenkräfte 2.Ordnung. Dazu dienen die beiden Nocken 15, 16, die untereinander gleich geformt und so ausgebildet sind, daß die Ausgleichsmasse 19 eine über der Zeit sinusförmige oder zumindest sinusähnliche Bewegung ausführt.

In Fig. 2 sind die Bewegungsrichtungen des Massenschwerpunkts 20 durch einen Doppelpfeil 22 gekennzeichnet. Eine maschinenfeste Längsführung 23 sorgt dafür, daß sich der Massenschwerpunkt 20 stets prallel zu den Längsachsen 12 der Zylinder 6 bewegt.

In allen Zeichnungsfiguren sind gleiche Teile mit gleichen Bezugszahlen versehen.

In Fig. 3 weist die Ausgleichsmasse 19 der Ausgleichsvorrichtung 35 einen heb- und senkbar an einem maschinenfesten Lager 24 gelagerten Winkelhebel 25 auf. Ein freies Ende eines ersten Arms 26 des Winkelhebels 25 trägt die auf dem Nockenkörper 14 abrollende Nockenrolle 18. An einem zweiten Arm 27 des Winkelhebels 25 befindet sich der Massenschwerpunkt 20 der den Winkelhebel 25 und seine Nockenrolle 18 mit umfassenden Ausgleichsmasse 19. Der Massenschwerpunkt 20 wird in diesem Fall auf einem Kreisbogen 28 um das maschinenfeste Lager 24 derart geführt, daß die Mitte des Kreisbogens 28 in der Mitte des Hubs der Nocken 15, 16 die Längsebene 21 der Kolbenmaschine 1 berührt. Dieser Zustand ist in Fig. 3 zeichnerisch dargestellt.

Fig. 4 enthält eine Abwandlung gegenüber Fig. 3 insofern, als hier der Kreisbogen 28 die Längsebene 21 der Kolbenmaschine 1 an zwei Stellen 29 und 30 durchdringt. Auf diese Weise kann man den Kreisbogen 28 als Bahn des Massenschwerpunkts 20 möglichst gut der Längsebene 21 annähern. In Fig. 3 erstreckt sich rechtwinklig von dem ersten Arm 26 eine Druckfeder 31, die am anderen Ende an einem Kolben 32 abgestützt ist. Der Kolben 32 ist abgedichtet in einem Hydraulikzylinder 33 geführt, dem durch eine Leitung 34 Druckflüssigkeit zuführbar ist. So kann in Abhängigkeit von der Drehzahl der Kolbenmaschine 1 die Kraft verändert werden, mit der die Nockenrolle 18 an den Nockenkörper 14 angedrückt wird.

Fig. 5 zeigt eine gegenüber Fig. 3 abgewandelte Ausgleichsvorrichtung 35 für die freien Massenkräfte. Der Nockenkörper 14 ist gegenüber dem Massenschwerpunkt 20 in Richtung der Längsachse 11 der Kurbelwelle versetzt angeordnet und an einer Kurbelwange 36 einer der Kurbeln 9 ausgebildet. Die den Nockenkörper 14 tragende Kurbelwange 36 ist der mittigen Querebene 13 benachbart, in der wiederum der Massenschwerpunkt 20 geführt ist.

Gemäß Fig. 6 ist der Kolben 32 in beliebiger Weise in Richtung des Doppelpfeils 37 derart verstellbar, daß die Nockenrolle 18 in jedem Fall in Anlage an dem Nockenkörper 14 bleibt.

Fig. 7 verdeutlicht die Ausbildung eines Nockens 38 für den Fall, daß nur freie Massenkräfte 1.Ordnung auszugleichen sind.

Fig. 8 stellt das zu Fig. 7 gehörende Diagramm des Weges der Ausgleichsmasse 19 über dem Kurbelwinkel dar.

Bei Fig. 9 handelt es sich um denjenigen Nockenkörper 14 mit den beiden diametral gegenüberliegenden Nocken 15, 16 gemäß Fig. 1 und 2. In diesem Fall sollen nur freie Massenkräfte 2.Ordnung ausgeglichen werden.

Fig. 10 ist das zu Fig. 9 gehörende Weg/Kurbelwinkel-Diagramm.

Fig. 11 zeigt zwei diametral gegenüberliegende, in einander übergehende Nocken 39 und 39' des Nockenkörpers 14 für den Fall, daß gleichzeitig freie Massenkräfte 1. und 2.Ordnung auszugleichen sind.

Fig. 12 stellt das zu Fig. 11 gehörende Weg/Kurbelwinkel-Diagramm dar.

Aus den Diagrammen der Fig. 8, 10 und 12 ist ersichtlich, daß die Ausgleichsmasse 19 in der gewünschten Weise eine sinusförmige oder zumindest annähernd sinusförmige Bewegung ausführt.

Fig. 13 zeigt eine Kolbenmaschine 1 entsprechend Fig. 1 in schematischer Darstellung. Hier ist eine als Schwingfeder/Ausgleichsmasse-System 40 ausgebildete Ausgleichsvorrichtung 35 verwendet, die starr mit dem Kurbelgehäuse der Kolbenmaschine 1 verbunden ist, z.B. mit einem Hauptlagerdeckel 41 der Kurbelwelle 10. Der Massenschwerpunkt 20 der Ausgleichsmasse ist auch hier wieder parallel zu den Längsachsen 12 der Zylinder 6 (Fig. 1) in der mittigen Querebene 13 der Kolbenmaschine 1 geführt. Diese Führung besorgt eine Längsführung 42. Die Ausgleichsmasse 19 ist in jeder Bewegungsrichtung an einer progressiv wirkenden Schwingfeder 43 und 44 abgestützt. Maschinenfeste Widerlager 45 und 46 der Schwingfedern 43, 44 sind zur Veränderung der Federrate der Schwingfedern 43, 44 in den Richtungen der Doppelpfeile 47 und 48 einstellbar. Für die Schwingungsanregung der Ausgleichsmasse 19 sorgen steuerbare Elektromagneten 49 und 50 seitlich von der Längsführung 42.

Fig. 14 zeigt eine wiederum andere Ausgleichsvorrichtung 35. Hier weist der Schwingungsantrieb für die Ausgleichsmasse 19 einen eine Kurbel 51 oder einen Exzenter drehend antreibenden Antriebsmotor 52 auf. Ein Kurbelzapfen 53 der Kurbel 51 ist über eine Koppelfeder 54 elastisch mit der Ausgleichsmasse 19 verbunden. Die Ausgleichsmasse 19 weist einen am freien Ende maschinenfest bei 55 gelagerten Arm 56 auf. Der Arm 56 ist mit einem Längsschlitz 57 versehen, in dem ein erster Anschlußpunkt 58 einer als Zug/Druck-Feder ausgebildeten Schwingfeder 59 zur Änderung der Eigenfrequenz des Schwingfeder/Ausgleichsmasse-Systems 40 in den Richtungen des Doppelpfeils 60 verschiebbar ist. Der Längsschlitz 57 ist in Form eines Kreisbogens um einen maschinenfesten zweiten Anschlußpunkt 61 der Schwingfeder 59 ausgebildet. Der Massenschwerpunkt 20 der Ausgleichsmasse 19 ist in diesem Fall entsprechend Fig. 3 so geführt, daß die Mitte des Kreisbogens 28 die Längsebene 21 berührt. Der Massenschwerpunkt 20 könnte alternativ auch entsprechend Fig. 4 geführt werden.

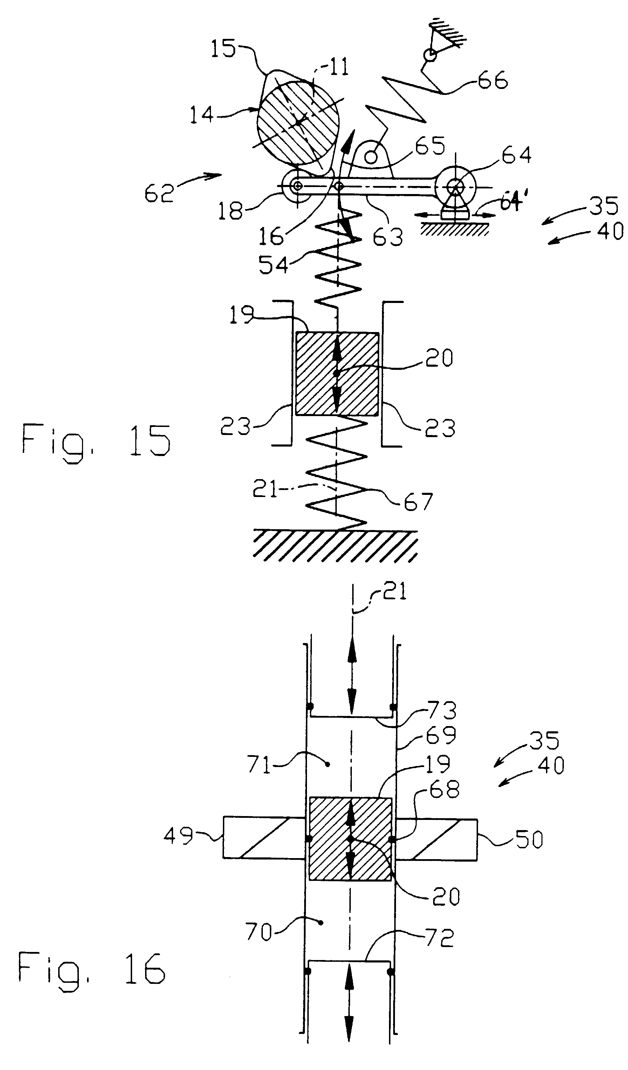

Bei der wiederum anderen Ausgleichsvorrichtung 35 gemäß Fig. 15 weist der Schwingungsantrieb für die Ausgleichsmasse 19 ein Nockengetriebe 62 mit einem durch die Nocken 15, 16 des Nockenkörpers 14 bewegbaren, als Schlepphebel ausgebildeten Folgeelement 63 auf. Das Folgeelement 63 ist an einem in den Richtungen eines Doppelpfeils 64' an der Kolbenmaschine 1 verschiebbaren Lager 64 gelagert, so daß es in den Richtungen eines Doppelpfeils 65 eine kreisbogenförmige Hub- und Senkbewegung ausführen kann. Das Folgeelement 63 liegt über die Nockenrolle 18 an dem Nockenkörper an. Für ständige Anlage sorgt eine maschinenfest aufgehängte Zugfeder 66. Das Folgeelement 63 ist über die Koppelfeder 54 elastisch mit der Ausgleichsmasse 19 verbunden. Die Ausgleichsmasse 19 ist durch die Längsführung 23 parallel zu den Längsachsen 12 (Fig. 1) der Zylinder 6 geführt und liegt auf einer Schwingfeder 67 auf, die unten maschinenfest abgestützt ist.

Fig. 16 zeigt eine wiederum andere Ausgleichsvorrichtung 35, bei der die Ausgleichsmasse 19 durch eine Dichtung 68 abgedichtet in einem Zylinder 69 parallel zu den Längsachsen 12 (Fig. 1) geführt ist. Auf jeder Stirnseite der Ausgleichsmasse 19 ist ein gasgefüllter Zylinderraum 70 und 71 als Schwingfeder angeordnet. Die Zylinderräume 70, 71 sind jeweils durch einen in dem Zylinder 69 zur Anpassung der Federrate gasdicht verschiebbaren Kolben 72 und 73 begrenzt. Der Schwingungsantrieb erfolgt auch hier wieder über die steuerbaren Elektromagneten 49, 50.

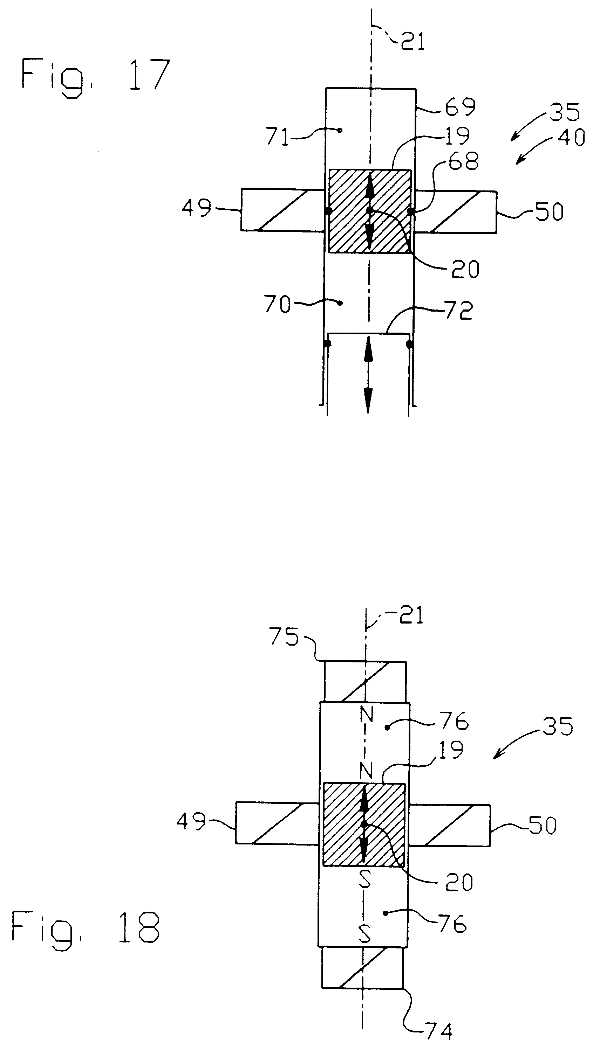

Die Ausführungsform nach Fig. 17 gleicht der nach Fig. 16. Allerdings ist in Fig. 17 der Zylinder 69 oben geschlossen, so daß sich nur unten der axial einstellbare Kolben 72 befindet.

Bei der Ausgleichsvorrichtung 35 gemäß Fig. 18 ist die Ausgleichsmasse 19 als Permanentmagnet ausgebildet und weist in ihrer einen Bewegungsrichtung einen Nordpol N und in ihrer anderen Bewegungsrichtung einen Südpol S auf. Als Schwingfeder sind an den Enden der Bewegungsbahn der Ausgleichsmasse maschinenfeste Elektromagneten 74 und 75 vorgesehen. Die Federrate der Schwingfeder ist durch entsprechende elektrische Ansteuerung der Elektromagneten 74, 75 an die Drehzahl der Kolbenmaschine anpaßbar. Zur Herabsetzung der Reibung ist die Ausgleichsmasse 19 in einem evakuierten Zylinderraum 76 bewegbar. Der Schwingungsantrieb geschieht wieder durch die steuerbaren Elektromagneten 49, 50.

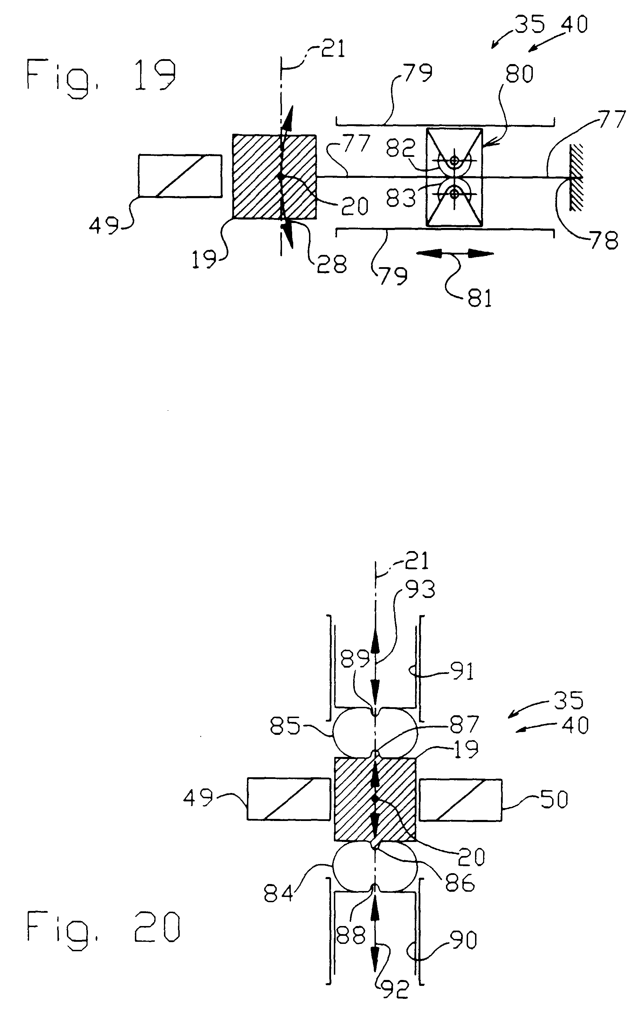

Bei der anderen Ausgleichsvorrichtung 35 gemäß Fig. 19 ist die Schwingfeder 77 als eine sich quer zu den Bewegungsrichtungen der Ausgleichsmasse 19 erstreckende, am freien Ende bei 78 maschinenfest eingespannte Biegefeder ausgebildet. In einer Linearführung 79 ist ein Schlitten als Stützlager 80 für die Schwingfeder 77 in den Richtungen eines Doppelpfeils 81 verschiebbar und einstellbar. Das Stützlager 80 weist Stützrollen 82 und 83 auf, die an gegenüberliegenden Seiten an der Schwingfeder 77 anliegen. So wird der Massenschwerpunkt 20 der Ausgleichsmasse 19 in diesem Fall auf dem Kreisbogen 28 mit einem Radius geführt, der abhängig ist von der jeweiligen Stellung des Stützlagers 80.

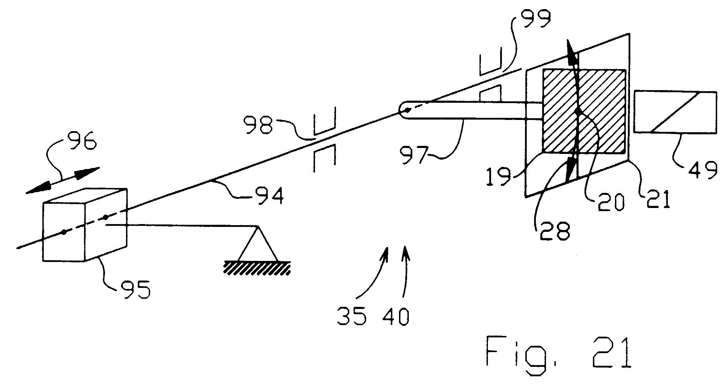

Bei der Ausgleichsvorrichtung 35 gemäß Fig. 20 ist jede Schwingfeder als Gasfederbalg 84 und 85 ausgebildet. Die Ausgleichsmasse 19 ist durch formschlüssige Verbindungen 86 und 87 relativ zu den Gasfederbälgen 84, 85 zentriert. Die Gasfederbälge 84, 85 sind ihrerseits durch formschlüssige Verbindungen 88 und 89 relativ zu maschinenfesten Widerlagern 90 und 91 zentriert. Die Widerlager 90, 91 lassen sich zur Veränderung der Federrate in den Richtungen der Doppelpfeile 92 und 93 einstellen. Der Schwingungsantrieb erfolgt wieder über die steuerbaren Elektromagneten 49, 50.

Bei der wiederum anderen Ausgleichsvorrichtung 35 gemäß Fig. 21 ist die Schwingfeder 94 als eine sich quer zu den Bewegungsrichtungen (vgl. 28) der Ausgleichsmasse 19 erstreckende, am freien Ende in einem Stützlager 95 maschinenfest eingespannte Drehfeder ausgebildet. Die Federrate der Drehfeder ist durch Verschieben des Stützlagers 95 in der Längsrichtung der Drehfeder in den Richtungen des Doppelpfeils 96 änderbar. Zwischen der Schwingfeder 94 und dem Stützlager 95 besteht eine unrunde, formschlüssige Verbindung.

Die Ausgleichsmasse 19 weist einen an der Schwingfeder 94 befestigten, sich quer zu der Schwingfeder 94 erstreckenden Arm 97 auf. Der Arm 97 ist vorzugsweise zwischen maschinenfesten Führungslagern 98 und 99 der Schwingfeder 94 angeordnet. Der Schwingungsantrieb erfolgt hier durch den steuerbaren Elektromagneten 49 in ähnlicher Weise wie bei der Ausgleichsvorrichtung 35 gemäß Fig. 19.

## Patentansprüche

1. Kolbenmaschine (1)
mit einer oder mehreren in einer Reihe angeordneten Kolben/Zylinder-Einheiten (2 bis 5),
wobei jede Einheit (2 bis 5) einen in einem Zylinder (6) oszillierenden Kolben (7) aufweist,
wobei jeder Kolben (7) über eine Pleuelstange (8) an einer Kurbelwelle (10) angelenkt ist,
und wobei jeder Kolben (7) und der oszillierende Anteil der zugehörigen Pleuelstange (8) unter anderem freie Massenkräfte in Richtung einer Längsachse (12) seines Zylinders (6) erzeugt,
und mit einer Ausgleichsvorrichtung (35), um die freien Massenkräfte ganz oder teilweise auszugleichen,
wobei die Ausgleichsvorrichtung (35) für die eine Kolben/Zylinder-Einheit oder die Reihe der Kolben/Zylinder-Einheiten (2 bis 5) eine Ausgleichsmasse (19) aufweist,
wobei die Ausgleichsmasse (19) über der Zeit zumindest ennähernd sinusförmig hin und her derart bewegbar ist, daß die hierdurch erzeugten Ausgleichs-Massenkräfte den freien Massenkräften zumindest annähernd entgegenwirken,
wobei die Ausgleichsmasse (19) in ihren beiden Bewegungsrichtungen durch wenigstens eine maschinenfest abgestützte Schwingfeder (43,44; 59;67;70,71;74, 75;77;84,85;94) beaufschlagt ist,
und wobei eine Schwingungsanregung des Schwingfeder/ Ausgleichsmasse-Systems (40) aus seiner Ruhelage durch einen Schwingungsantrieb (49,50;51 bis 54;62) mit der Frequenz der Kurbelwelle (10) oder einem Vielfachen dieser Frequenz entsprechend der Ordnung der auszugleichenden freien Massenkräfte erfolgt,
dadurch gekennzeichnet, daß die Federrate der wenigstens einen Schwingfeder in Abhängigkeit von der Drehzahl der Kolbenmaschine (1) so änderbar ist, daß die Eigenfrequenz des Schwingfeder/Ausgleichsmasse-Systems (40) der Drehzahl der Kolbenmaschine (1) synchron folgt,
und daß der für den Ausgleich der freien Massenkräfte erforderliche Hub des Schwingfeder/Ausgleichsmasse-Systems (40) durch Energieerhöhung oder Energieminderung des Schwingfeder/Ausgleichsmasse-Systems (40) durch Verschieben der Phasenlage des Schwingungsantriebs (49,50;51 bis 54;62) relativ zu dem schwingenden Schwingfeder/Ausgleichsmasse-System (40) erzielbar ist.

2. Kolbenmaschine nach Anspruch 1, dadurch gekennzeichnet, daß der Schwingungsantrieb wenigstens einen steuerbaren Elektromagneten (49,50) aufweist.

3. Kolbenmaschine nach Anspruch 1 oder 2,
dadurch gekennzeichnet, daß die wenigstens eine Schwingfeder (70,71;43,44;84,85) progressiv wirkend ist.

4. Kolbenmaschine nach Anspruch 1 oder 3, dadurch gekennzeichnet, daß der Schwingungsantrieb einen eine Kurbel (51) oder einen Exzenter drehend antreibenden Antriebsmotor (52) aufweist, und daß ein Kurbelzapfen (53) der Kurbel (51) oder der Exzenter über eine Koppelfeder (54) elastisch mit der Ausgleichsmasse (19) verbunden ist.

5. Kolbenmaschine nach Anspruch 4, dadurch gekennzeichnet, daß der für den Ausgleich der freien Massenkräfte erforderliche Hub der Ausgleichsmasse (19) durch Energieerhöhung oder Energieminderung durch Verschieben der Phasenlage des Kurbelzapfens (53) oder des Exzenters relativ zu dem schwingenden Schwingfeder/Ausgleichsmasse-System (40) erzielbar ist.

6. Kolbenmaschine nach Anspruch 1 oder 3, dadurch gekennzeichnet, daß der Schwingungsantrieb ein Nockengetriebe (62) mit einem durch wenigstens einen Nocken (15,16) einer Welle bewegbaren Folgeelement (63) aufweist, und daß das Folgeelement (63) über eine Koppelfeder (54) elastisch mit der Ausgleichsmasse (19) verbunden ist.

7. Kolbenmaschine nach Anspruch 6, dadurch gekennzeichnet, daß das Folgeelement (63) um ein Lager (64) heb- und senkbar ist,
und daß das Lager (64) an der Kolbenmaschine (1) verschiebbar (64') ist zur Energieerhöhung oder Energieminderung des Schwingfeder/Ausgleichsmasse-Systems (40) durch Änderung der Phasenlage.

8. Kolbenmaschine nach Anspruch 6, dadurch gekennzeichnet, daß die den wenigstens einen Nocken (15,16) tragende Welle relativ zu der Kurbelwelle (10) winkelverstellbar ist zur Energieerhöhung oder Energieminderung des Schwingfeder/Ausgleichsmasse-Systems (40) durch Änderung der Phasenlage.

9. Kolbenmaschine nach einem der Ansprüche 1 bis 8, dadurch gekennzeichnet, daß die Ausgleichsmasse (19) in jeder Bewegungsrichtung an einer Schwingfeder (43,44;70,71;84,85) abgestützt ist, und daß durch ein maschinenfestes Widerlager (45,46;72,73;90,91) wenigstens eine der Schwingfedern in beiden Bewegungsrichtungen dar Ausgleichsmasse (19) einstellbar ist.

10. Kolbenmaschine nach Anspruch 9, dadurch gekennzeichnet, daß jede Schwingfeder als Gasfederbalg (84,85) ausgebildet ist.

11. Kolbenmaschine nach Anspruch 10 dadurch gekennzeichnet, daß die Ausgleichsmasse (19) durch formschlüssige Verbindungen (86,87) relativ zu den Gasfederbälgen (84,85) zentriert ist.

12. Kolbenmaschine nach Anspruch 10 oder 11, dadurch gekennzeichnet, daß die Gasfederbälge (84,85) durch formschlüssige Verbindungen (88,89) relativ zu den maschinenfesten Widerlagern (90,91) zentriert sind.

13. Kolbenmaschine nach einem der Ansprüche 1, 2 und 4 bis 6, dadurch gekennzeichnet, daß die Ausgleichsmasse (19) einen am freien Ende maschinenfest gelagerten (55) Arm (56) aufweist,
daß der Arm (56) mit einem Längsschlitz (57) versehen ist, in dem ein erster Anschlußpunkt (58) der als Zug/Druck-Feder ausgebildeten Schwingfeder (59) zur Änderung der Eigenfrequenz des Schwingfeder/Ausgleichsmasse-Systems (40) verschiebbar ist,
und daß ein zweiter Anschlußpunkt (61) der Schwingfeder (59) maschinenfest gelagert ist.

14. Kolbenmaschine nach Anspruch 13, dadurch gekennzeichnet, daß der Längsschlitz (57) in Form eines Kreisbogens um den zweiten Anschlußpunkt (61) ausgebildet ist.

15. Kolbenmaschine nach Anspruch 1 oder 2, dadurch gekennzeichnet, daß die Ausgleichsmasse (19) in einem Zylinder (69) verschiebbar ist,
daß auf jeder Stirnseite der Ausgleichsmasse (19) ein gasgefüllter Zylinderraum (70,71) als Schwingfeder angeordnet ist,
und daß wenigstens einer der Zylinderräume (70,71) durch einen in dem Zylinder (69) zur Anpassung der Federrate gasdicht verschiebbaren Kolben (72,73) begrenzt ist.

16. Kolbenmaschine nach Anspruch 1 oder 2, dadurch gekennzeichnet, daß die Ausgleichsmasse (19) als Permanentmagnet ausgebildet ist und in ihrer einen Bewegungsrichtung einen Nordpol (N) und in ihrer anderen Bewegungsrichtung einen Südpol (S) aufweist,
daß als Schwingfeder an der Bewegungsbahn der Ausgleichsmasse (19) maschinenfeste Elektromagneten (74,75) vorgesehen sind,
und daß die Federrate der Schwingfeder durch entsprechende elektrische Ansteuerung der Elektromagneten (74,75) an die Drehzahl der Kolbenmaschine (1) anpaßbar ist.

17. Kolbenmaschine nach Anspruch 16, dadurch gekennzeichnet, daß die Ausgleichsmasse (19) in einem evakuierten Zylinderraum (76) bewegbar ist.

18. Kolbenmaschine nach Anspruch 1 oder 2, dadurch gekennzeichnet, daß die Schwingfeder (77) als eine sich quer zu den Bewegungsrichtungen der Ausgleichsmasse (19) erstreckende, am freien Ende maschinenfest eingespannte (78) Biegefeder ausgebildet ist,
und daß die Federrate der Biegefeder durch Verschieben eines maschinenfest abgestützten Stützlagers (80) in der Längsrichtung der Biegefeder änderbar ist.

19. Kolbenmaschine nach Anspruch 1 oder 2,
dadurch gekennzeichnet, daß die Ausgleichsmasse (19) einen an einer als Drehfeder ausgebildeten Schwingfeder (94) befestigten Arm (97) aufweist,
und daß die wirksame Länge und damit die Federrate der Schwingfeder (94) durch ein maschinenfest abgestütztes, entlang der Schwingfeder (94) verschiebbares und mit der Schwingfeder (94) drehfest verbundenes Stützlager (95) einstellbar ist.

20. Kolbenmaschine nach einem der Ansprüche 1 bis 8, 13, 14, 18 oder 19, dadurch gekennzeichnet, daß eine Längsebene (21) der Kolbenmaschine (1) durch den gemeinsamen Massenschwerpunkt der Kolben (7) und der oszillierenden Anteile der Pleuelstangen (8) und parallel zu den Längsachsen (12) der Zylinder (6) verläuft, und daß der Massenschwerpunkt (20) der Ausgleichsmasse (19) auf einem Kreisbogen (28) derart geführt ist, daß entweder die Mitte des Kreisbogens (28) die Längsebene (21) der Kolbenmaschine (1) berührt, oder daß der Kreisbogen (28) die Längsebene (21) der Kolbenmaschine (1) an zwei Stellen (29,30) durchdringt.

## Claims

1. Reciprocating machine (1) comprising one or more piston/cylinder units (2 to 5) arranged in a line,
wherein each unit (2 to 5) comprises a piston (7) arranged to oscillate within a cylinder (6),
wherein each piston (7) is coupled by means of a connecting rod (8) to a crankshaft (10),
and wherein each piston (7) and the oscillating part of the associated connecting rod (8) produce among other things free inertial forces in the direction of a longitudinal axis (12) of its cylinder (6),
and also comprising a balancing device (35) in order wholly or partially to neutralize the free inertial forces,
wherein the balancing device (35) includes a balancing mass (19) for the piston/cylinder unit or the series of piston/cylinder units (2 to 5),
wherein the balancing mass (19) is movable back and forth in an at least approximately sinusoidal manner with time such that the balancing inertial forces produced thereby at least approximately counteract the free inertial forces,
wherein the balancing mass (19) is subjected in its two directions of movement to the force of at least one oscillatory spring (43, 44; 59; 67; 70, 71; 74, 75; 77; 84, 85; 94) supported fixedly by the machine, and wherein an oscillatory excitation of the oscillatory spring/balancing mass system (40) from its rest position is effected by an oscillatory drive (49, 50; 51 to 54; 62) at the frequency of the crankshaft (10) or at a multiple of this frequency depending upon the order of the free inertial forces which are to be neutralized,
characterised in that the spring rate of said at least one oscillatory spring can be varied in dependence upon the speed of rotation of the reciprocating machine (1) so that the fundamental frequency of the oscillatory spring/balancing mass system (40) follows the speed of rotation of the reciprocating machine (1) synchronously,
and that the stroke of the oscillatory spring/balancing mass system (40) necessary for the neutralization of the free inertial forces is achievable by increasing or decreasing the energy of the oscillatory spring/balancing mass system (40) by displacement of the phase position of the oscillatory drive (49, 50; 51 to 54; 62) relative to the oscillating oscillatory spring/balancing mass system (40).

2. Reciprocating machine according to claim 1, characterised in that the oscillatory drive comprises at least one controllable electromagnet (49, 50).

3. Reciprocating machine according to claim 1 or 2, characterised in that the at least one oscillatory spring (70, 71; 43, 44; 84, 85) is progressively acting.

4. Reciprocating machine according to claim 1 or 3, characterised in that the oscillatory drive comprises a drive motor (52) which rotationally drives a crank (51) or an eccentric, and that a crank pin (53) of the crank (51) or the eccentric is connected elastically to the balancing mass (19) by means of a coupling spring (54).

5. Reciprocating machine according to claim 4, characterised in that the stroke of the balancing mass (19) necessary for the neutralization of the free inertial forces is achievable by increasing or decreasing the energy by displacement of the phase position of the crank pin (53) or the eccentric relative to the oscillating oscillatory spring/balancing mass system (40) .

6. Reciprocating machine according to claim 1 or 3, characterised in that the oscillatory drive comprises a cam gear (62) with a follower element (63) movable by at least one cam (15, 16) of a shaft, and that the follower element (63) is connected elastically to the balancing mass (19) by means of a coupling spring (54).

7. Reciprocating machine according to claim 6, characterised in that the follower element (63) can be raised and lowered about a bearing (64), and that the bearing (64) is displaceable (64') on the reciprocating machine (1) in order to increase or decrease the energy of the oscillatory spring/balancing mass system (40) by changing the phase position.

8. Reciprocating machine according to claim 6, characterised in that the shaft carrying said at least one cam (15, 16) is angularly adjustable relative to the crankshaft (10) in order to increase or decrease the energy of the oscillatory spring/balancing mass system (40) by changing the phase position.

9. Reciprocating machine according to one of claims 1 to 8, characterised in that the balancing mass (19) is supported in each direction of movement by an oscillatory spring (43, 44; 70, 71; 84, 85), and that by means of a machine-fixed stop (45, 46; 72, 73; 90, 91) at least one of the oscillatory springs is adjustable in both directions of movement of the balancing mass (19).

10. Reciprocating machine according to claim 9, characterised in that each oscillatory spring is a gas spring bellows (84, 85).

11. Reciprocating machine according to claim 10, characterised in that the balancing mass (19) is centred relative to the gas spring bellows (84, 85) by means of shape; locking connections (86, 87).

12. Reciprocating machine according to claim 10 or 11, characterised in that the gas spring bellows (84, 85) are centred relative to the machine-fixed stops (90, 91) by shape-locking connections (88, 89).

13. Reciprocating machine according to one of claims 1, 2 and 4 to 6, characterised in that the balancing mass (19) includes an arm (56) mounted (55) fixedly with the machine at its free end,
that the arm (56) is provided with a longitudinal slot (57) in which a first connection point (58) of the oscillatory spring (59) formed as a tensile/compression spring is displaceable for changing the fundamental frequency of the oscillatory spring/balancing mass system (40),
and that a second connection point (61) of the oscillatory spring (59) is mounted fixedly on the machine.

14. Reciprocating machine according to claim 13, characterised in that the longitudinal slot (57) is in the form of an arcuate slot centred about the second connection point (61).

15. Reciprocating machine according to claim 1 or 2, characterised in that the balancing mass (19) is displaceable in a cylinder (69),
at each end face of the balancing mass (19) there is a gas-filled cylinder chamber (70, 71) acting as an oscillatory spring,
and at least one of the cylinder chambers (70, 71) is delimited by a piston (72, 73) which is displaceable in a gas-tight manner in the cylinder (69) in order to modify the spring rate.

16. Reciprocating machine according to claim 1 or 2, characterised in that the balancing mass (19) is a permanent magnet and has a north pole (N) in its one direction of movement and a south pole (S) in its other direction of movement,
electromagnets (74, 75) fixed to the machine on the path of movement of the balancing mass (19) are provided as oscillatory springs,
and the spring rate of the oscillatory springs is adaptable to the speed of rotation of the reciprocating machine (1) by appropriate electrical control of the electromagnets (74, 75).

17. Reciprocating machine according to claim 16, characterised in that the balancing mass (19) is movable in an evacuated cylinder chamber (76).

18. Reciprocating machine according to claim 1 or 2, characterised in that the oscillatory spring (77) is a flexural spring fixed (78) to the machine at its free end and extending transversely to the directions of movement of the balancing mass (19),
and that the spring rate of the flexural spring can be changed by displacement of a support bearing (80) in the longitudinal direction of the flexural spring, the support bearing being supported fixedly on the machine.

19. Reciprocating machine according to claim 1 or 2, characterised in that the balancing mass (19) includes an arm (97) fixed to an oscillatory spring (94) formed as a torsion spring,
and that the effective length and consequently the spring rate of the oscillatory spring (94) is adjustable by a support bearing (95) which is connected fixed against rotation with the oscillatory spring (94) and which is displaceable along the oscillatory spring (94) while being supported fixedly by the machine.

20. Reciprocating machine according to one of claims 1 to 8, 13, 14, 18 or 19, characterised in that a longitudinal place (21) of the reciprocating machine (1) extends through the common centre of mass of the pistons (7) and of the oscillating parts of the connecting rods (8) and parallel to the longitudinal axes (12) of the cylinders (6), and the centre of mass (20) of the balancing mass (19) is guided on an arcuate path (28) such that either the centre of the arc (28) contacts the longitudinal plane (21) of the reciprocating machine (1), or that the arcuate path (28) passes through the longitudinal plane (21) of the reciprocating machine (1) at two points (29, 30).

## Revendications

1. Moteur à pistons (1),
comportant une ou plusieurs unités piston/cylindre (2 à 5) disposées en ligne,
chaque unité (2 à 5) comportant un piston (7) oscillant dans un cylindre (6),
chaque piston (7) étant articulé sur un vilebrequin (10) par l'intermédiaire d'une bielle (8),
et chaque piston (7) et la partie oscillante de la bielle (8) associée engendrant, entre autres, des forces libres proportionnelles à la masse en direction d'un axe longitudinal (12) d'un cylindre (6),
et un dispositif d'équilibrage (35) destiné à équilibrer totalement ou partiellement les forces libres proportionnelles à la masse,
le dispositif d'équilibrage (35) comportant une masse d'équilibrage (19) destinée à l'unité piston/cylindre ou à la ligne d'unités piston/cylindre (2 à 5),
la masse d'équilibrage (19) pouvant effectuer dans le temps un mouvement de va-et-vient au moins approximativement sinusoïdal, de sorte que les forces d'équilibrage proportionnelles à la masse ainsi engendrées s'opposent au moins approximativement aux forces libres proportionnelles à la masse,
la masse d'équilibrage (19) étant chargée dans ses deux sens de déplacement par au moins un ressort oscillant (43, 44 ; 59 ; 67 ; 70, 71 ; 74, 75 ; 77 ; 84, 85 ; 94) qui prend solidairement appui sur le moteur,
et une excitation d'oscillation du système (40) ressort oscillant/masse d'équilibrage à partir de sa position de repos étant effectuée par un entraînement d'oscillation (49, 50 ; 51 à 54 ; 62) à la fréquence du vilebrequin (10), ou à un multiple de cette fréquence, en fonction de l'ordre des forces libres proportionnelles à la masse à équilibrer,
caractérisé en ce que le module d'élasticité du seul ressort oscillant au moins peut être modifié en fonction de la vitesse de rotation du moteur à pistons (1), de telle sorte que la fréquence propre du système (40) ressort oscillant/masse d'équilibrage soit synchronisée avec la vitesse de rotation du moteur à pistons (1),
et en ce que la course du système (40) ressort oscillant/masse d'équilibrage, qui est nécessaire pour l'équilibrage des forces libres proportionnelles à la masse, peut être obtenue par une augmentation d'énergie ou une réduction d'énergie du système (40) ressort oscillant/masse d'équilibrage par le décalage de la position de phase de l'entraînement d'oscillation (49, 50 ; 51 à 54 ; 62) par rapport au système oscillant (40) ressort oscillant/masse d'équilibrage.

2. Moteur à pistons selon la revendication 1, caractérisé en ce que l'entraînement d'oscillation comporte au moins un électroaimant (49, 50) commandable.

3. Moteur à pistons selon la revendication 1 ou 2, caractérisé en ce que le seul ressort oscillant au moins (70, 71 ; 43, 44 ; 84, 85) est un ressort à action progressive.

4. Moteur à pistons selon la revendication 1 ou 3, caractérisé en ce que l'entraînement d'oscillation comporte un moteur d'entraînement (52) entraînant en rotation une manivelle (51) ou un excentrique, et en ce qu'un maneton (53) de la manivelle (51) ou l'excentrique est relié élastiquement à la masse d'équilibrage (19) par l'intermédiaire d'un ressort de couplage (54).

5. Moteur à pistons selon la revendication 4, caractérisé en ce que la course de la masse d'équilibrage (19), qui est nécessaire pour l'équilibrage des forces libres proportionnelles à la masse, peut être obtenue par une augmentation d'énergie ou une réduction d'énergie par le décalage de la position de phase du maneton (53) de manivelle ou de l'excentrique par rapport au système oscillant (40) ressort oscillant/masse d'équilibrage.

6. Moteur à pistons selon la revendication 1 ou 3, caractérisé en ce que l'entraînement d'oscillation comporte un mécanisme à came (62) avec un élément suiveur (63) pouvant être déplacé par au moins une came (15, 16) d'un arbre, et en ce que l'élément suiveur (63) est relié élastiquement à la masse d'équilibrage (19) par l'intermédiaire d'un ressort de couplage (54).

7. Moteur à pistons selon la revendication 6, caractérisé en ce que l'élément suiveur (63) peut être soulevé et abaissé autour d'un palier (64),
et en ce que le palier (64) est mobile (64') sur le moteur à pistons (1) pour l'augmentation d'énergie ou la réduction d'énergie du système (40) ressort oscillant/masse d'équilibrage par modification de la position de phase.

8. Moteur à pistons selon la revendication 6, caractérisé en ce que la position angulaire de l'arbre portant la seule came (15, 16) au moins est réglable par rapport au vilebrequin (10) pour l'augmentation d'énergie ou la réduction d'énergie du système (40) ressort oscillant/masse d'équilibrage par modification de la position de phase.

9. Moteur à pistons selon l'une quelconque des revendications 1 à 8, caractérisé en ce que la masse d'équilibrage (19) prend appui sur un ressort oscillant (43, 44 ; 70, 71 ; 84, 85) dans chaque sens de déplacement, et en ce que l'un au moins des ressorts oscillants est réglable dans les deux sens de déplacement de la masse d'équilibrage (19) par une butée (45, 46 ; 72, 73 ; 90, 91) solidaire du moteur.

10. Moteur à pistons selon la revendication 9, caractérisé en ce que chaque ressort oscillant est réalisé sous la forme d'un soufflet à amortissement pneumatique (84, 85).

11. Moteur à pistons selon la revendication 10, caractérisé en ce que la masse d'équilibrage (19) est centrée par rapport aux soufflets à amortissement pneumatique (84, 85) au moyen de liaisons par complémentarité de forme (86, 87).

12. Moteur à pistons selon la revendication 10 ou 11, caractérisé en ce que les soufflets à amortissement pneumatique (84, 85) sont centrés par rapport aux butées (90, 91) solidaires du moteur au moyen de liaisons par complémentarité de forme (88, 89).

13. Moteur à pistons selon l'une quelconque des revendications 1, 2, et 4 à 6, caractérisé en ce que la masse d'équilibrage (19) comporte un bras (56), dont l'extrémité libre est reliée solidairement au moteur au niveau de (55),
en ce que le bras (56) est muni d'une fente longitudinale (57) dans laquelle un premier point de raccordement (58) du ressort oscillant (59), qui est réalisé sous la forme d'un ressort de traction/compression, est mobile dans le but de modifier la fréquence propre du système (40) ressort oscillant/masse d'équilibrage,
et en ce qu'un deuxième point de raccordement (61) du ressort oscillant (59) est relié solidairement au moteur.

14. Moteur à pistons selon la revendication 13, caractérisé en ce que la fente longitudinale (57) est réalisée sous la forme d'un arc de cercle autour du deuxième point de raccordement (61).

15. Moteur à pistons selon la revendication 1 ou 2, caractérisé en ce que la masse d'équilibrage (19) est mobile dans un cylindre (69),
en ce qu'un espace cylindrique (70, 71) rempli de gaz est disposé en tant que ressort oscillant sur chaque face frontale de la masse d'équilibrage (19),
et en ce l'un au moins des espaces cylindriques (70, 71) est délimité par un piston (72, 73) pouvant se déplacer de façon étanche au gaz dans le cylindre (69) pour l'adaptation du module d'élasticité.

16. Moteur à pistons selon la revendication 1 ou 2, caractérisé en ce que la masse d'équilibrage (19) est réalisée sous la forme d'un aimant permanent et comporte dans l'un de ses sens de déplacement un pôle nord (N), et dans son autre sens de déplacement un pôle sud (S),
en ce que des électroaimants (74, 75) solidaires du moteur sont prévus en tant que ressort oscillant sur la trajectoire de déplacement de la masse d'équilibrage (19),
et en ce que le module d'élasticité du ressort oscillant peut être adapté à la vitesse de rotation du moteur à pistons (1) par une commande électrique appropriée des électroaimants (74, 75).

17. Moteur à pistons selon la revendication 16, caractérisé en ce que la masse d'équilibrage (19) est mobile dans un espace cylindrique (76) sous vide.

18. Moteur à pistons selon la revendication 1 ou 2, caractérisé en ce que le ressort oscillant (77) est réalisé sous la forme d'un ressort de flexion s'étendant transversalement aux sens de déplacement de la masse d'équilibrage (19), dont l'extrémité libre est fixée solidairement (78) sur le moteur,
et en ce le module d'élasticité du ressort de flexion peut être modifié par le déplacement dans la direction longitudinale du ressort de flexion d'un palier d'appui (80), qui prend solidairement appui sur le moteur.

19. Moteur à pistons selon la revendication 1 ou 2, caractérisé en ce que la masse d'équilibrage (19) comporte un bras (97) fixé sur un ressort oscillant (94) réalisé en tant que ressort de torsion,
et en ce que la longueur active, et par conséquent le module d'élasticité du ressort oscillant (94), sont réglables par un palier d'appui (95) qui prend solidairement appui sur le moteur, qui peut être déplacé le long du ressort oscillant (94), et qui est relié fixé contre la rotation au ressort oscillant (94).

20. Moteur à pistons selon l'une quelconque des revendications 1 à 8, 13, 14, 18 ou 19, caractérisé en ce qu'un plan longitudinal (21) du moteur à pistons (1) passe par le centre de gravité commun des masses des pistons (7) et des parties oscillantes des bielles (8), et s'étend parallèlement aux axes longitudinaux (12) des cylindres (6), et en ce que le centre de gravité (20) de la masse d'équilibrage (19) est guidé sur un arc de cercle (28) de telle sorte que, soit le centre de l'arc de cercle (28) touche le plan longitudinal (21) du moteur à pistons (1), soit l'arc de cercle (28) passe en deux points (29, 30) par le plan longitudinal (21) du moteur à pistons (1).
